# EUROPÄISCHE PATENTSCHRIFT

(11) **EP 3 165 347 B1**
(45) Veröffentlichungstag und Bekanntmachung des Hinweises auf die Patenterteilung: **02.01.2019**
(21) Anmeldenummer: 16002545.8
(22) Anmeldetag: 30.09.2014
(51) Int. Cl.: B29C 51/22, B29C 51/16, B29C 51/32, B29C 51/44

(54) **ANLAGE UND VERFAHREN ZUM THERMOFORMEN EINER FOLIE ZU EINER VIELZAHL PRODUKTE**
INSTALLATION AND METHOD OF THERMOFORMING A FOIL TO CREATE A PLURALITY OF PRODUCTS
INSTALLATION ET PROCÉDÉ DE THERMOFORMAGE D'UNE FEUILLE EN UNE PLURALITÉ DE PRODUITS

(30) Priorität: 30.09.2013 DE 102013016175; 15.10.2013 DE 102013017070
(43) Veröffentlichungstag der Anmeldung: 10.05.2017
(62) Teilanmeldung aus: 14809584.7
(73) Patentinhaber: Kiefel GmbH, 83395 Freilassing (DE)
(72) Erfinder: Wabnig, Erwin, DE - 83313 Siegsdorf (DE); Wieser, Gerhard, DE - 83451 Piding (DE)
(74) Vertreter: Farago-Schauer, Peter Andreas

(56) Entgegenhaltungen:
- WO-A1-88/06965
- WO-A1-2006/102239
- DE-A1- 2 328 368
- DE-A1-102004 059 962
- US-A- 5 783 229
- US-A1- 2008 036 121

## Beschreibung

Die Erfindung betrifft eine Anlage und ein Verfahren zum Thermoformen einer Folie zu einer Vielzahl Produkte.

In der Praxis ist das Thermoformen von Folien ein sehr bewährtes Verfahren. Damit hergestellte Produkte umfassen beispielsweise Verpackungen für Lebensmittel, andere Waren, Blisterverpackungen, Einwegbehältnisse, Mehrwegbehältnisse wie Becher oder Teller und desgleichen, bis hin zu größeren Produkten wie beispielsweise Innen- oder auch Außenverkleidungsteilen von Kraftfahrzeugen oder auch die Kunststoffkörper zum Bilden von Innenräumen für Kühlschränke.

Generell wird in dieser Technologie eine Folie durch eine Thermoformanlage transportiert. Der Begriff "Folie" steht hier vereinfachend für ein thermoplastisches Flächenmaterial, sei es einlagig oder sei es mehrlagig, sei es als Endlosmaterialbahn oder in Form von vorkonfektionierten Einzelstücken identischer oder unterschiedlicher Gestaltung. Zum Herstellen einer Vielzahl von kleinen, gleichen Artikeln wie beispielsweise Bechern oder Lebensmittelverpackungen und desgleichen hat es sich bewährt, eine Schar von Kavitäten an dem weiblichen Teil eines prinzipiell zweiteiligen Formwerkzeugs auszubilden. Die Folie wird vorerwärmt in das Werkzeug eingeführt. Das negative Werkzeug, welches das eigentliche Formwerkzeug ist, wird im Regelfall unterhalb der Folie angeordnet, wobei im gesamten Rahmen der hier vorliegenden Patentanmeldung deutlich betont sein soll, dass eine konkrete Festlegung, welcher Teil des Werkzeugs oben und welcher unten oder in welcher Ausrichtung auch immer sein soll, nicht notwendig ist. Entscheidend ist allein, dass sich einerseits das weibliche Formwerkzeug und andererseits die Druckglocke gegenüber an der Folienbahn befinden. Beispielsweise oberhalb der Folie befindet sich eine Druckglocke, welche gewissermaßen die obere Hälfte des Werkzeugs darstellt. Hat die Folie im intermittierenden Vorschub ihre designierte Position erreicht, schließt die Druckglocke und fixiert dadurch die Folie an den Rändern in ihrem designierten Bereich. Dies ermöglicht das Ziehen des thermoplastischen Werkstoffs. Meist wird nun mit einem vor dem Stempel eine leichte Vorverformung in der Folie in die Kavitäten hinein vorgenommen. Anschließend werden Überdruck in der Druckglocke und/oder Unterdruck im Formwerkzeug angelegt, konkret in der Vielzahl Kavitäten. Die Folie wird hierdurch in die Kavitäten hineingezogen und formt diese nach. Nach einer bestimmten Formzeit, welche der gezogenen Folie zum Abkühlen gelassen wird, um Formstabilität zu erreichen, können die Produkte ausgeformt werden.

### Zum Ausformen gibt es zwei verschiedene Prinzipien:

Einerseits ist es bekannt, einen Bandstahlschnitt vorzusehen. Hierzu wird ein Bandformstahl verwendet. Dieser wird entweder im Formwerkzeug integriert oder in einer separaten Stanzstation angeordnet. Beim Bandstahlschneiden werden die Konturen der hergestellten Schar Produkte nicht vollständig aus der Folie gelöst, somit aus dem Restfoliengitter, sondern es werden infolge kleiner Kerben im Werkzeug kleine Stege zum Halten der Produkte im Restfoliengitter stehen gelassen. Vorteilhafterweise kann das Stanzen auf diese Weise recht kostengünstig erfolgen. Ist der Bandformstahl verschlissen, kann er mit relativ wenig Kostenaufwand ausgetauscht werden. Der Weitertransport erfordert zunächst keine eigenen Transportmittel. Vielmehr können die geformten Produkte mit dem Restfoliengitter weitertransportiert werden. An einer späteren Station erfolgt dann ein Ausdrücken der Produkte aus dem Restfoliengitter.

Eine Alternative zum Bandstahlschneiden ist das sogenannte Durchfallstanzen. Beim Durchfallstanzen werden hoch präzise Stanzmesser gegen die Ränder von Aussparungen einer Stanzbrille gefahren. Hierdurch erfolgt ein vollständiges Austrennen der geformten Produkte aus dem Restfoliengitter. Die Produkte verbleiben deshalb beim Öffnen des Werkzeugs in den Kavitäten und müssen von dort mit einer separaten Entformeinrichtung entformt werden. Hierzu hat es sich bewährt, einen Rotations- oder Kippformtisch im kombinierten Thermoform-/Trennwerkzeug einzusetzen. Ein solcher Tisch dreht und/oder senkt das im gerade laufenden Takt eingesetzte weibliche Formwerkzeug mit seiner Schar Kavitäten aus der ursprünglichen Lage und Orientierung heraus, so dass die einzelnen Produkte besser gegriffen werden können. Oft kommen an dieser Stelle Vakuumgreifer zum Einsatz, welche in jede Kavität einen Vakuumgreifarm fahren und dadurch die Produkte aus den Kavitäten herausnehmen.

Ein Rotations- oder Kippwerkzeugtisch ist naturgemäß deutlich teurer in der Anschaffung als ein nicht kippendes und nicht rotierendes Formwerkzeug. Die Technologie des kippenden oder rotierenden Werkzeugtisches wird deshalb nur bei sehr hohen Stückzahlen präzise herzustellender Produkte eingesetzt, somit im gleichen Anwendungsfall wie auch das Durchfallstanzen eingesetzt wird. Denn auch die meist aus Stahl bestehenden Werkzeuge zum Durchfallstanzen sind verhältnismäßig teuer in der Konstruktion.

Unabhängig von den vorstehend genannten beiden grundlegend verschiedenen Arten des Stanzens und somit des Weitertransports von in Scharen hergestellten Produkten beim Thermoformen hat sich eine Technologie entwickelt, welche in Kavitäten beim Herstellen von Produkten Zusatzteile in die Kavitäten einlegt, bevor die Produkte in den Kavitäten hergestellt werden. Durch das Einpressen der noch warmen Folie in die Kavitäten verbindet sich die Oberfläche oder das Innere der Folienlage mit dem bereits in der Kavität vorgehaltenen Zusatzteil. In der Praxis wird dieses Verfahren gern als In-Mold-Labelling oder IML bezeichnet. Das IML wird beispielsweise für Dekorlagen verwendet, vor allem bekannt von Joghurtbechern, Margarinebechern und desgleichen, oder es können beispielsweise elektronische Schwingkreise eingelegt werden wie RFID-Chips oder ähnliches.

Die einzulegenden und somit mit den Produkten zu verbindenden Zusatzteile können beispielsweise mehrere Seiten der Kavität bedecken, so dass sie im letztendlich kann beispielsweise nur an einer oder mehreren singulären Stellen ein Zusatzteil vorgesehen sein.

Die EP 2 586 589 B1 stellt eine Anlage mit einem Rotations-Formwerkzeug vor. In der oberen Position, der Formposition, werden die Produkte geformt. In einer demgegenüber um 180° verdrehten, unteren Position werden die Produkte entnommen.

Die DE102004059962 offenbart eine Anlage nach dem Oberbegriff des Anspruchs 1.

Der Erfindung liegt die Aufgabe zugrunde, dem Stand der Technik eine Verbesserung oder eine Alternative zur Seite zu stellen, und insbesondere Masse und Herstellungskosten zu sparen.

Die Aufgabe wird mit den Merkmalen der unabhängigen Ansprüche gelöst.

### Begrifflich sei hierzu folgendes erläutert:

Zunächst sei darauf hingewiesen, dass im Rahmen der hier vorliegenden Patentanmeldung unbestimmte Artikel und unbestimmte Zahlenangaben wie "ein...", "zwei..." usw. im Regelfall als mindestens-Angaben zu verstehen sein sollen, also als "mindestens ein...", "mindestens zwei..." usw., sofern sich nicht etwa aus dem Kontext oder dem konkreten Text einer bestimmten Stelle ergibt, dass etwa dort nur "genau ein...", "genau zwei..." usw. gemeint sein soll.

Die "Folie" kann sowohl als weiches Folienmaterial als auch als härteres Plattenmaterial vorliegen. Die Folie kann außerdem als Endlosfolienband oder in vorkonfektionierten Abschnitten zum Einsatz kommen.

Die "Vielzahl Produkte" liegt normalerweise rasterförmig auf einer Fläche eines Werkzeugs vor, beispielsweise in einem rechteckigen Raster mit Zeilen und Spalten, wobei die einzelnen Zeilen und/oder Spalten entweder regelmäßig oder gegeneinander leicht versetzt sein können. Im einfachsten Falle liegt einfach eine Matrix von beispielsweise 4x8 Produkten oder in beliebigen anderen Anzahlen vor.

Die "Kavitäten" im Formwerkzeug sind aus dem Stand der Technik ebenfalls bekannte Mulden, in welche hinein das thermoplastische Folienmaterial thermogeformt wird und dessen Innenoberfläche formgebend für die Außenkontur der hineingeformten Folie ist.

Üblicherweise bestehen die Kavitäten aus einem mikroporösen oder mit Luftdurchtrittsöffnungen versehenen Material hergestellt, beispielsweise gebohrt, gelasert oder gesintert. Wenn ohne die Formen ausgekommen werden soll, werden oft Galvanowerkzeuge eingesetzt.

Das "weibliche" Formwerkzeug soll ein Werkzeugtyp sein, der Kavitäten aufweist, also konkave Ausnehmung, im Gegensatz zu konvexen oder anderweitig vorstehenden Elementen bei einem männlichen Formwerkzeug.

Das "Formwerkzeug" kann im Wesentlichen auch einteilig sein, wobei gegenüber derjenigen - weiblichen - Seite, in welche hinein die Produkte geformt werden, im Regelfall jedenfalls die Vakuumglocke sein wird, welche als das Gegenwerkzeug aufgefasst werden kann. Oft sind innerhalb dieser vor den Stempel oder andere den Hilfseinrichtungen vorgesehen.

Der "Formtisch" trägt das weibliche Formwerkzeug mit seiner Vielzahl Kavitäten, also mit der Schar Kavitäten an dieser Werkzeugoberfläche, wobei an einem Formtisch mehrere Scharen Kavitäten vorgesehen sein können.

Ein "Label" sei ein flächiges Dekorelement, welches außen auf die Oberfläche der thermogeformten Folie aufgebracht wird und dazu mit seiner Beschriftung/Bedruckung/seinem Dekor nach außen gerichtet in die Kavität eingelegt wird, bevor die Folie in die Kavität hinein thermogeformt wird.

Ein "Smart Tag" sei ein elektronisches aktives oder passives Bauteil, beispielsweise mit einem Schwingkreis und bevorzugt einer Antenne ausgestattet. Auch ein chemisches Bauteil wie beispielsweise ein Indikator für eine strikte Einhaltung der Kühlkette nach dem HACCP-Standard sei unter einem Smart Tag subsumiert.

Die "Maschinenrichtung" ist diejenige Richtung, in welcher die Folie durch die Anlage transportiert wird. Es muss sich dabei nicht um eine einzige globale Richtung handeln. Vielmehr erfährt die Folie in ihrem Weg durch die Anlage, hier kurz als Folienbahn bezeichnet, im Regelfall verschiedene Umlenkungen. Der letztendlich designierte Weg für die Folie sei als die Maschinenrichtung jeweils lokal aufgefasst.

Der "Kippmechanismus für das weibliche Formwerkzeug" zeigt an, dass eine in der Praxis als Kippmaschine bezeichnete Technologie verwendet werden soll. Im einfachsten Fall kann eine Kippmaschine verwendet werden, welche nach dem Stand der Technik bereits dafür verwendet worden ist, im Durchfallschnitt erzeugte und vereinzelte Produkte nach unten aus der Folienbahn herauszubewegen, so dass diese im gekippten Zustand entnommen werden können. Der Kippbewegung für das weibliche Formwerkzeug kann eine Hubbewegung, vor allem in Form eines Absenkens, eine einer Kulisse folgende Bewegung und/oder eine beliebige andere Bewegung überlagert sein.

Die "Stanzstation mit dem Stanzwerkzeug zum Ausstanzen" der Produkte kann ein beliebiges Stanzwerkzeug sein, beispielsweise also ein Werkzeug mit einem Bandformstahl, in der Praxis oft als BFS abgekürzt, oder Durchfallstanzwerkzeugen.

Entgegen jedem Trend im Stand der Technik wird gemäß dem ersten Aspekt der vorliegenden Erfindung eine prinzipiell recht aufwendige Mechanik, nämlich eine Kippmaschine, eingesetzt, dennoch aber auf das teure Durchfallstanzwerkzeug an der Formstation verzichtet. Das Stanzen kann auf beliebige Weise später erfolgen, und die geformten Produkte können mit der Folie jenseits der Formstation weiter transportiert werden, entweder vollkommen intakt oder mit vorgefertigten Soll-Trennstellen wie beispielsweise mit einem Bandformstahl erzeugt.

Der Kippmechanismus des Formwerkezugs wird hingegen nicht zum Auswerfen der vereinzelten Produkte verwendet, sondern stattdessen zum Einlegen der Zusatzteile.

Das Einlegen der Zusatzteile in die Kavitäten kann beispielsweise bei stillstehendem gekipptem Formwerkzeug erfolgen.

Alternativ oder kumulativ kann die Bewegung des Werkzeugs aus seiner Arbeitsposition heraus ebenfalls zum Einlegen der Produkte verwendet werden, gerade dann, wenn mehrere Zusatzteile in die eine Kavität eingelegt werden sollen.

Wenn die Formstation an Rändern der Kavitäten Stanzfrei ausgeführt ist, also auch keine Vorstanzungen mit stehengelassenen Kerben vornimmt, dann baut das Werkzeug trotz des Kippmechanismus' relativ günstig und robust.

Nach einem zweiten Aspekt löst die gestellte Aufgabe eine Anlage zum Thermoformen einer Folie zu einer Vielzahl Produkte in einer entsprechenden Vielzahl Kavitäten in einem weiblichen Formwerkzeug an einem Formtisch sowie zum Versehen der Produkte mit Zusatzteilen, insbesondere mit Labels und/oder Smart Tags, innerhalb der Kavitäten, wobei die Anlage dazu eingerichtet ist, die Folie in einer Maschinenrichtung zu transportieren, wobei sich die Anlage dadurch kennzeichnet, dass der Formtisch als Rotationsformtisch mit drei Scharen Kavitäten in drei weiblichen Formwerkzeugen gestaltet ist, wobei der Rotationsformtisch dazu eingerichtet ist, mittels eines Antriebs um eine Achse rotiert zu werden, um die drei Scharen Kavitäten in unterschiedliche Positionen zu bringen, darunter in eine Thermoformposition und in eine Entnahmeposition.

Die "drei Scharen Kavitäten" sind - wie generell - als mindestens-Angabe zu verstehen. Es soll also mindestens drei weibliche Formwerkzeuge am Rotationsformtisch geben, welche jeweils durch Schalten des Rotationsformtisches um seine Achse sequenziell in ein- und dieselbe Position gebracht werden können. Darunter soll die "Thermoformposition" sein, also diejenige Form, in welcher das gerade dorthin geschaltete Formwerkzeug seine Kavitäten im Betrieb der Anlage mit der thermogeformten Folie gefüllt bekommen kann. Außerdem soll die "Entnahmeposition" darunter sein, also diejenige Position, in welcher die thermogeformten Produkte aus der von der Thermoformposition fortgeschalteten Kavitäten die Produkte entnehmbar machen, sei es als vereinzelte Produkte oder sei es als noch zusammenhängende Produkte.

Dadurch, dass mindestens "drei" Formwerkzeuge mit entsprechenden Scharen Kavitäten vorgesehen sind, ergibt sich gegenüber der Thermoformposition und der Entnahmeposition noch mindestens eine weitere Position. In dieser kann beispielsweise das Zusatzteil eingebracht werden.

Es wird vorgeschlagen, dass die Anlage eine Einrichtung zum Heben und Senken einer Transportschiene für die Folie aufweist, so dass zum Rotieren des Rotationsformtischs die Folie angehoben oder abgesenkt und dadurch aus dem Flugkreis des Rotationsformtischs gebracht werden kann.

Dabei sei darauf hingewiesen, dass im Rahmen der hier vorliegenden Anmeldung der Formtisch nicht über eine global fixe Achse rotiert werden muss. Vielmehr kann sich die Achse auch im Raum bewegen. So ist denkbar, dass die Anlage eine Einrichtung zum Heben und Senken des Rotationsformtisches aufweist, so dass zum Rotieren des Rotationsformtischs dieser angehoben oder abgesenkt werden und dadurch sein Flugkreis vollständig ober- oder unterhalb die Folienbahn gebracht werden kann.

Ein Rotationsformtisch hat bevorzugt eine horizontal liegende Schaltachse, um welche die drei weiblichen Formwerkzeuge rotiert werden können.

Der Rotationsformtisch trägt die drei Scharen Kavitäten an Armen, wobei die Scharen Kavitäten an einem gegenüber einem Kern des Rotationsformtischs relativ bewegbar ausgestalteten radial äußeren Anteil getragen sind. Bei einer solchen Konstruktion kann ein massiver Rotationsformtisch entfallen, und es kann auf einen Kern mit Armen und daran getragenen Formwerkzeugen reduziert werden, was Masse und damit Herstellkosten spart.

Außerdem kann in einer solchen Konstruktion der Rotationsformtisch leicht in eine aufrechte Form gebracht werden, so dass er um eine aufrechte, bevorzugt vertikale, Achse drehbar gestaltet ist, wobei bevorzugt der radial äußere Armteil gegenüber dem radial inneren, also zum Kern führenden, Armteil um eine Längserstreckungsrichtung des Arms rotierbar und/oder abknickbar gestaltet ist. Denn wenn ein Rotationsformtisch um eine aufrecht stehende Schaltachse drehbar gestaltet ist, dann bleibt die Ausrichtung der Kavitäten zunächst unverändert, in den meisten Fällen der Praxis also bleibt die Oberfläche des Formwerkzeugs horizontal, und die Kavitäten öffnen sich vertikal nach oben. Um demgegenüber eine leichtere Entnehmbarkeit zu schaffen und Bauraum einzusparen, bringt die Drehbarkeit der Formwerkzeuge um die Längsachse der Arme eine Kippbarkeit der Formwerkzeuge in eine horizontale Komponente oder sogar vollständig in die Horizontale. Beispielsweise kann sich ein Arm des Rotationsformtisches durch Schalten um die Schaltachse des Rotationsformtisches in eine Erstreckungsrichtung senkrecht zur Maschinenrichtung der in die Formstation zulaufenden Folie bringen, mit einfachen Worten also seitlich von der vorherigen Transportrichtung wegstehen. Wenn in einer solchen Konstellation das Formwerkzeug um die Längsachse des nun senkrecht zur vorherigen Transportrichtung stehenden Armes gedreht wird, dann kippt es nach vorn oder wahlweise nach hinten. In der Praxis wird ein Kippen nach vorn, also gewissermaßen in Verlängerung - wenn auch seitlich versetzt - parallel zur ursprünglichen Eintransportrichtung der Folie der einfachste Weg sein, weil dort am meisten Bauraum für folgende Stationen vorhanden ist.

Nach einem dritten Aspekt löst die gestellte Aufgabe eine Anlage zum Thermoformen einer Folie zu einer Vielzahl Produkte in einer entsprechenden Vielzahl Kavitäten in einem weiblichen Formwerkzeug sowie zum Versehen der Produkte mit Zusatzteilen, insbesondere Labels und/oder Smart Tags, innerhalb der Kavitäten, wobei die Anlage dazu eingerichtet ist, die Folie in einer Maschinenrichtung zu transportieren, wobei sich die Anlage dadurch kennzeichnet, dass die Anlage eine Führung für einen Kavitätenwagen aufweist und dazu eingerichtet ist, den Kavitätenwagen in eine Thermoformposition, in eine Auswurfposition und in eine Beladeposition zu verfahren.

Begrifflich sei die "Auswurfposition" mit der vorstehend genannten "Entnahmeposition" austauschbar. Bei einem Auswerfen hilft ein Mittel, welches vom Formwerkzeug kommt, aktiv beim Hinausschieben der Produkte aus den Kavitäten. Beim Entnehmen hingegen greift von außen ein Entnehmer in die Kavität hinein und entnimmt das Produkt. Beide Verfahren sind jeweils denkbar, und zwar jeweils alternativ oder kumulativ.

Die "Beladeposition" sei diejenige Position, in welcher die Kavitäten mit den Zusatzteilen bestückt werden.

Die Beladeposition muss nicht ein singulärer Ort sein. Vielmehr kann auch eine Bewegung zum Beladen der Kavitäten verwendet werden.

Der "Kavitätenwagen" sei ein Formwerkzeug mit einer Schar Kavitäten, wobei eine Bewegung unabhängig von einer Schaltachse ermöglicht sein soll. Beispielsweise kann der Kavitätenwagen als "Führung" eine Kulisse oder eine Schiene aufweisen, oder einen Roboterarm.

Der Kavitätenwagen kann so gesteuert sein, dass nur in der Thermoformposition ein Anhalten erfolgt. In diesem Fall wird die Taktzeit bestmöglich ausgenutzt. Das Entnehmen oder Auswerfen und das Bestücken können in einer Bewegung des Kavitätenwagens erfolgen, nur zum Thermoformen in der Thermoformposition hält der Kavitätenwagen mit seiner Schar Kavitäten an, damit nicht auch das Gegenwerkzeug, also die Vakuumglocke etc., bewegt werden muss.

Ein Kavitätenwagen kann von der Führung in einer von einer Kreisbahn abweichenden Bahn geführt werden.

Bevorzugt ist eine Mehrzahl Kavitätenwagen vorgesehen, wobei mindestens zwei hiervon, bevorzugt alle gegeneinander, unabhängig beschleunigbar und bremsbar in derselben Führung oder in verschiedenen Führungen geführt sind. Eine unabhängige Bewegungsfreiheit von mindestens zwei Kavitätenwagen zueinander ist erforderlich, wenn sich ein Kavitätenwagen bewegen soll, während ein anderer gerade in der Thermoformposition verharrt.

Im Falle von Kavitätenwagen kann ein Formtischsockel zumindest im Wesentlichen positionsfix angeordnet sein, so dass der Kavitätenwagen zwischen die Folie und den Formtischsockel zum Einnehmen der Thermoformposition fahrbar ist und dort anhaltbar ist. Bei einer solchen Konstruktion kann das Formwerkzeug ohne eigenen Tisch verfahren werden, und ein- und derselbe Tisch dient in der Thermoformposition zum Aufnehmen der Kräfte für sämtliche Kavitätenwagen mit ihren jeweils einfach dort angeordneten Scharen Kavitäten.

Bevorzugt weist ein Formtischsockel bei einer solchen Konstruktion eine Zentrierung für den Kavitätenwagen und/oder für die Kavitäten am Kavitätenwagen auf. Eine Zentrierung kann beispielsweise eine Anordnung aus einem konvexen Element an einem der beiden Elemente und einem konkaven Element an dem anderen gestaltet sein, so beispielsweise ein kugelförmiges Element und ein hohlsphärisches Element.

In einer besonders bevorzugten Ausführungsform weist die Anlage eine Stanzbrille als Stanz-Gegenstück zum weiblichen Formwerkzeug auf, wobei das Formwerkzeug und die Stanzbrille getrennt vorgesehen sind.

Die Stanzbrille ist im Fall des Durchfallstanzens ein Bauteil, welches eine hohe Präzision und eine ebenso hohe Standfestigkeit erfordert. Die Stanzkante ist bei einer solchen Konstruktion am weiblichen Formwerkzeug angebracht. Dies entspricht dem bisherigen Stand der Technik bei kombinierten Form-Trenn-Werkzeugen. Wenn das Werkzeug schließt, kommt die Stanzkante in Eingriff mit dem Material, wird aber nicht durchgestanzt. Erst nach dem Thermoformen führt das Werkzeug einen kleinen Zusatzhub in Schließrichtung durch, welcher zum letztendlichen Ausstanzen der Produkte führt.

Die Stanzbrille kann ortsfest an der Thermoformstation und somit an der kombinierten Form-Stanz-Station vorgesehen sein, oder sie kann dort beweglich ausgeführt sein, beispielsweise gemeinsam mit der Druckglocke beweglich. Entscheidend ist jedoch, dass eine geringere Anzahl Stanzbrillen im Vergleich zu den Formwerkzeugen vorhanden ist, beispielsweise nur genau eine Stanzbrille mit Öffnungen für genau eine Schar Kavitäten an dem Formwerkzeug, beispielsweise am Rotationsformtisch. Es sind aber mehrere Scharen Kavitäten vorhanden. Jede Schar Kavitäten positioniert sich in der Stanzposition, beispielsweise also in der kombinierten Thermoform-Stanz-Position, vor ein- und derselben Stanzbrille.

Die Stanzbrille kann vertikal verfahrbar ausgestaltet sein. Dies ermöglicht es ihr in besonders leichter Weise, sich gemeinsam mit der Druckglocke zu heben und zu senken, so dass der Rotationstisch keine Bewegung außer seiner Bewegung um die Schaltachse ausführen muss und dennoch der Flugkreis des Rotationsformtisches während seiner Schaltrotation nicht mit der Stanzbrille kollidiert.

Es wurde bereits erläutert, dass bevorzugt eine Durchfallstanze vorgesehen ist.

Die Anlage zum Thermoformen kann bei sämtlichen vorstehend genannten Erfindungsaspekten und Ausführungsbeispielen bevorzugt zum Thermoformen einer Mehrschichtfolie eingerichtet sein und dazu eine Mehrzahl Folieneinspeisemittel aufweisen, beispielsweise mehrere Kaulenhalter, Tänzerwalzenanordnungen und Heizmittel.

Nach einem vierten Aspekt löst die gestellte Aufgabe eine Anlage zum Thermoformen einer Folie zu einer Vielzahl Produkte in einer dementsprechenden Vielzahl Kavitäten in einem weiblichen Formwerkzeug an einem Formtisch, wobei die Anlage dazu eingerichtet ist, die Folie in einer Maschinenrichtung entlang einer Folienbahn zu transportieren, wobei die Anlage eine Durchfallstanzstation mit einem Wechseltisch mit Stanzwerkzeugen einerseits der Folienbahn und einer Stanzbrille andererseits der Folienbahn aufweist, wobei die Durchfallstanzstation dazu eingerichtet ist, den Wechseltisch mit n Tischen mit den Stanzwerkzeugen gegenüber der Stanzbrille sequenziell jeweils in einer Stanzposition zu positionieren, vor allem in einer kombinierten Thermoform-Stanz-Position, und/oder dass die Anlage weniger Stanzbrillen als Tische aufweist.

Dies wurde vorstehend bereits erläutert. Hier werden die Tische als solche angesprochen, welche die Formwerkzeuge tragen.

Derselbe Gedanke ist auch dann erfinderisch, wenn die Anlage dazu eingerichtet ist, genau eine Stanzbrille und mindestens zwei weibliche Formwerkzeuge in der Stanz-position zu positionieren, vor allem in der kombinierten Thermoform-Stanz-Position, und/oder die Anlage weniger Stanzbrillen als weibliche Formwerkzeuge aufweist.

Auch eine solche Anlage im Licht dieses vorstehenden bevorzugt zum Versehen der Produkte mit Zusatzteilen eingerichtet, insbesondere mit Labels und/oder Smart Tags.

In der bevorzugten Ausführungsform ist genau eine Stanzbrille vorgesehen und dazu eingerichtet, sich mit allen Tischen/allen weiblichen Formwerkzeugen des Wechseltisches in Stanzposition anzuordnen, bevorzugt in kombinierter Thermoform-Stanz-Position.

Der Wechseltisch kann als Rotationstisch ausgestattet sein, bevorzugt mit gleichwinklig angeordneten Tischen und/oder gleichwinklig angeordneten weiblichen Formwerkzeugen. Bei einer gleichwinkligen Anordnung der n weiblichen Formwerkzeuge mit ihrer jeweils einen Schar Kavitäten bleibt ein maximaler, gleichmäßiger Abstand zwischen den einzelnen Formwerkzeugen, so dass beim Schalten des Rotationstisches um die Schaltachse ein möglichst großer Bauraum für die einzelnen Behandlungsmittel an den verschiedenen Positionen verbleibt, so beispielsweise zum Einlegen von Zusatzteilen, zum Entnehmen von Produkten, zum Bedrucken oder Bespritzen, zum Befüllen, beispielsweise mit einem Brühmittel wie Kaffee- oder Teepulver oder für weitere Funktionen.

Bei n voneinander jeweils um den Schaltwinkel beabstandeten weiblichen Formwerkzeugen können ohne weiteres n Positionen mit verschiedenen Funktionen ausgerüstet werden.

Wenn der Wechseltisch unterhalb der Folienbahn angeordnet ist und die Stanzbrille mit einer Druckglocke und bevorzugt mit einem vor den Stempel oberhalb der Folienbahn angeordnet ist, können besonders hohe Qualitäten im Produkt erreicht werden.

Nach einem fünften löst die gestellte Aufgabe ein Verfahren zum taktweisen Thermoformen einer Vielzahl Produkte aus einer Folie in einer Anlage, vor allem in einer Anlage wie eingangs der hier vorliegenden Patentanmeldung beschrieben, sowie zum Versehen der Produkte mit Zusatzteilen, insbesondere mit Labels und/oder mit Smart Tags, wobei die Anlage eine Vielzahl Kavitäten in einem weiblichen Formwerkzeug an einem Formtisch aufweist und das Versehen mit Zusatzteilen innerhalb der Kavitäten erfolgt, wobei die Anlage dazu eingerichtet ist, die Folie in einer Maschinenrichtung zu transportieren, mit den Schritten (a) Thermoformen der Produkte im Formtisch; (b) Kippen des Formtischs unter Belassung der Produkte in der Folie; (c) Weitertransportieren der Folienbahn mit den thermogeformten Produkten; (d) Einlegen der Zusatzteile in die Kavitäten am gekippten Formtisch; und (e) Austrennen der Produkte aus der Folie, konkret aus dem Restfoliengitter, an einer Folgestation.

Nach einem sechsten Aspekt löst die gestellte Aufgabe ein Verfahren zum taktweisen Thermoformen einer Vielzahl Produkte aus einer Folie in einer Anlage, vor allem in einer Anlage wie als zweite Variante in der hier vorliegenden Patentanmeldung beschrieben, sowie zum Versehen der Produkte mit Zusatzteilen, insbesondere mit Labels und/oder mit Smart Tags, wobei die Anlage zwei Scharen je einer Vielzahl Kavitäten in einem weiblichem Formwerkzeug an einem Formtisch aufweist, vor allem an einem Rotationsformtisch, und wobei das Versehen mit Zusatzteilen innerhalb der Kavitäten erfolgt, wobei die Anlage dazu eingerichtet ist, die Folie in einer Maschinenrichtung zu transportieren, mit den Schritten (a) Einführen der Folie in das Formwerkzeug an einer Formstation; (b) Schließen einer Druckglocke über einen Nutzen, welcher eine Schar Kavitäten in einer Formposition umfasst; (c) vor denen der Folie in die Kavitäten hinein mittels einer vor den Stempeleinrichtung; (d) Thermoformen der Produkte mittels Über- und/oder Unterdruck in die Kavitäten hinein; (e) Abwarten einer Formzeit; (f) Ausführen eines Zusatzhubs des Formwerkzeugs, dabei Stanzen der Folie gegen eine Stanzbrille, welche auf der Seite der Druckglocke angeordnet ist; (g) Verfahren der Schar Produkte in eine Entnahmeposition und dortiges Entnehmen der Produkte aus der Schar Kavitäten; (h) Verfahren der Schar Kavitäten aus der Entnahmeposition in eine Einlegposition und dortiges Einlegen der Zusatzteile in eine Schar Kavitäten; sowie (i) Verfahren der Schar Kavitäten aus der Einlegeposition in die Formposition.

Es sei ausdrücklich betont, dass die Schritte der vorstehend aufgelisteten Verfahren untereinander teils verdreht sein können und/oder parallel laufen können.

Eine Anlage baut konstruktiv besonders günstig, wenn alle Verfahrvorgänge gleichzeitig erfolgen. Dies kann beispielsweise mit einem Rotationsformtisch der Fall sein, oder mit jedwedem Tisch, der die drei oder mehr weiblichen Formwerkzeuge starr miteinander verbindet.

Zusätzlich zu den Form-, Entnahme- und Einlegpositionen kann eine weitere Position oder können mehrere weitere Positionen angefahren werden.

Um möglichst kompakt bewegen zu können, wird vorgeschlagen, dass die Stanzbrille und der Formtisch zum Verfahren der Scharen Kavitäten, vor allem also zum Schalten des Formtisches um eine Schaltachse im Falle eines Rotationsformtisches, voneinander taktweise beabstandet und wieder angenähert werden. Dabei können sich einer oder beide der beiden bewegen.

Die Erfindung wird nachstehend anhand zweier Ausführungsbeispiele unter Bezugnahme auf die Zeichnung näher erläutert. Dort zeigen
- Figur 1: stark schematisch in einem Längsschnitt eine Thermoformanlage mit einer Kippmaschine und einer davon separat angeordneten Exzenterstanze und einer dadurch transportierten Folie im Betrieb der Thermoformanlage,
- Figur 2: schematisch in einer Draufsicht ein fünfseitiges Label für einen Becher,

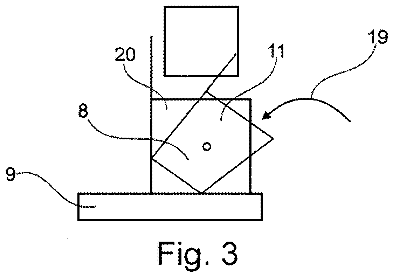

- Figur 3: die Kippmaschine aus Figur 1 mit gekipptem weiblichem Formwerkzeug in einer Beladeposition für Labels gemäß Figur 2, und
- Figur 4: stark schematisch in einem Längsschnitt eine zweite Thermoformanlage, mit einem Rotationsformtisch mit drei weiblichen Formwerkzeugen.

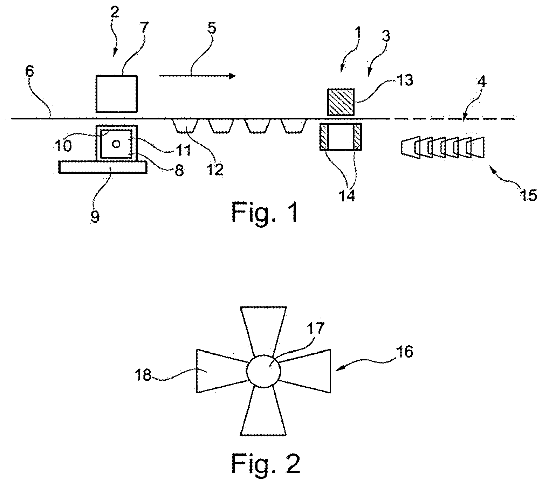

Die erste Thermoformanlage 1 in Figur 1 besteht im Wesentlichen aus einer Thermoformstation 2, einer Stanzstation 3 und einer Stapelstation 4, welche längs einer Maschinenrichtung 5 am Transportweg einer zugeführten Endlosfolienbahn 6 sequentiell angeordnet sind.

Die Thermoformstation 2 besteht aus einem Werkzeug mit einem Obertisch 7 und einem Untertisch 8, welche gemeinsam an einem Maschinengestell (nicht dargestellt) auf einem Bett 9 angeordnet und mit Antrieben (nicht dargestellt) versehen sind.

Der Untertisch 8 beinhaltet an seiner Oberseite 10 ein weibliches Formwerkzeug mit einer Vielzahl Kavitäten (nicht dargestellt) die in einem Raster angeordnet sind.

Der Untertisch 8 ist außerdem um eine Kippachse 11 antreibbar kippbar gelagert. Zudem ist der Untertisch 8 dazu eingerichtet, gegenüber dem Bett 9 vertikal nach oben verfahren zu werden, also in Richtung auf die Folienbahn der Endlosfolienbahn 6. Gleichzeitig ist der Obertisch 7 dazu eingerichtet, vertikal nach unten verfahren zu werden.

Der Obertisch 7 beinhaltet vor allem eine Druckglocke (nicht im Einzelnen dargestellt).

Im Betrieb der Anlage wird die Endlosfolienbahn 6 entlang der Maschinenrichtung 5 horizontal in das geöffnete Werkzeug an der Thermoformstation 2 eintransportiert. Das Werkzeug schließt, wobei die Druckglocke einen Nutzen am Endlosfolienband 6 umschließt. Es kann vor den Stempel zum Einsatz kommen. Letztlich wird über einen Überdruck ausgehend vom Obertisch 7 oder über einen Unterdruck ausgehend vom weiblichen Formwerkzeug oder über beides das Endlosfolienband 6 in die Kavitäten des weiblichen Formwerkzeugs hinein thermogeformt.

Anschließend öffnet sich das Werkzeug der Thermoformstation 2.

Dabei verbleiben durch das Thermoformen hergestellte Produkte 12 (exemplarisch beziffert) am Endlosfolienband 6 und können bei geöffnetem Werkzeug weiter in Maschinenrichtung 5 transportiert werden.

Durch die intermittierende Vorwärtsbewegung gelangen die hergestellten Produkte 12 zu der Stanzstation 3. Dort führt ein Stanzkörper 13 eine Stanzbewegung gegen eine Stanzbrille 14 aus und vereinzelt dadurch die einzelnen Produkte 12. Diese werden anschließend in der Stapelstation 4 zu einem Stapel 15 aufgestapelt und können so die erste Thermoformanlage 1 verlassen.

Um in der Thermoformstation 2 die Produkte 12 jeweils mit einem fünfseitigem Label 16 mit einem Bodenlabelteil 17 und vier Seitenlabelteilen 18 (exemplarisch beziffert) zu versehen, wird in jede Kavität im weiblichen Formwerkzeug vor dem Thermoformen jeweils ein Label 16 in jede Kavität des weiblichen Formwerkzeugs eingebracht. Dazu wird der Untertisch 8 motorisch um seine Kippachse 11 gegenüber dem Bett 9 gekippt, im hier vorgestellten Beispiel nach vorne zur weiteren Maschinenrichtung 5 hin, so dass mit einer Einlegebewegung 19 Labels 16 in die einzelnen Kavitäten gelegt werden können. Dadurch, dass der Untertisch 8 hierbei um einen Winkel 20 gegenüber der Vertikalen gekippt ist, kann das Einlegen der Labels unter der weitertransportierten Bahn des Endlosfolienbandes 6 erfolgen.

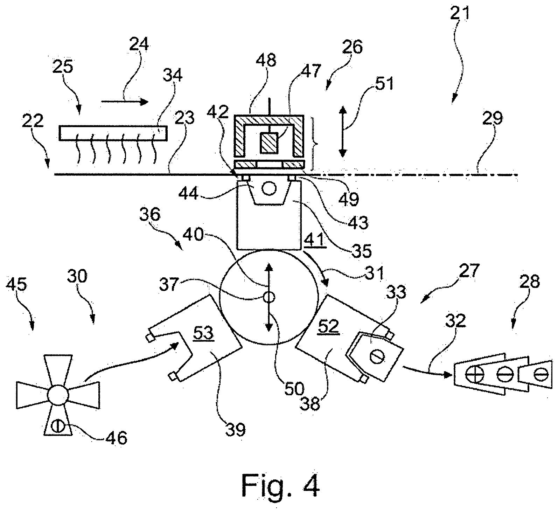

Die zweite Thermoformanlage 21 in Figur 4 besteht im Wesentlichen aus einer Zuführung 22, eines Endlosfolienbandes 23, und entlang einer Maschinenrichtung 24, einer Heizstation 25, einer kombinierten Thermoform-Durchfallstanz-Station 26, einer Entnehmstation 27 und einer Stapelstation 28 sowie einer Weitertransporteinrichtung (nicht dargestellt) für ein Restfoliengitter 29 und einer Beladeeinrichtung 30.

Im Betrieb der zweiten Thermoformanlage 21 wird das Endlosfolienband 23 entlang der Maschinenrichtung 24, 31, 32 zum Herstellen von Produkten 33 (exemplarisch beziffert) eingesetzt.

Das Endlosfolienband 23 wird zunächst durch die Heizstation 25 unter einem Heizstrahler 34 vorgewärmt und kommt dadurch in seinen plastischen Zustand.

Im Weitertransport erreicht das Endlosfolienband 23 die kombinierte Thermoform-Durchfallstanz-Station 26. Dort befindet sich ein erstes weibliches Formwerkzeug 35 an einem Rotationsformtisch 36, um eine Schaltachse 37 gleichwinklig angeordnet mit einem zweiten weiblichen Formwerkzeug 38 und einem dritten weiblichen Formwerkzeug 39. Zum Schließen des Werkzeugs gegen das Endlosfolienband 23 wird der Rotationsformtisch 36 entlang einer Hubrichtung 40 vertikal nach oben verfahren. Das erste weibliche Formwerkzeug 35 befindet sich dabei in einer kombinierten Thermoform-Stanz-Position 41, mit seiner Oberseite 42 horizontal angeordnet, parallel zum Endlosfolienband 23. Ein Stanzring 43 wird leicht in das warme Endlosfolienband 23 eingefahren, aber nicht durch dieses hindurchgestanzt.

In der Schar Kavitäten 44 (exemplarisch dargestellt und beziffert) liegt jeweils ein Label 45 (exemplarisch beziffert) mit einer exemplarischen grafischen Markierung 46.

Ein vor den Stempel 47 fährt innerhalb einer geschlossenen Druckglocke 48 mehrfach in das Endlosfolienband 23 hinein und formt dieses so nach unten, in die Kavität 44 hinein.

Nach dem Vordehnen wird Druckluft in der Druckglocke 48 aufgebracht. Gleichzeitig zieht das erste weibliche Formwerkzeug durch die Kavität 44 Luft aus der Unterseite des Werkzeugs, so dass das Endlosfolienband 23 in die Kavität 44 hineinthermogeformt wird. Aufgrund der Hitze des Endlosfolienbandes 23 und bevorzugt auch des Labels 45 verbinden sich das Label 45 und das hergestellte Produkt 33.

Nach dem Abwarten einer Formzeit fährt der Rotationsformtisch 36 einen kurzen Zusatzhub in seiner Hubrichtung 40, woraufhin der Stanzring 43 das Endlosfolienband 23 gegen eine Stanzbrille 49 endgültig durchfährt und die einzelnen Produkte 33 aus dem dadurch erzeugten Restfoliengitter 29 heraustrennt.

Das Werkzeug der kombinierten Thermoform-Stanz-Station öffnet sich, und entweder fährt der Rotationsformtisch 36 eine Senkbewegung 50 nach unten und/oder das Oberwerkzeug mit Druckglocke 48 und Stanzbrille 49 fährt entlang seiner Hubrichtung 51 nach oben, bevorzugt gemeinsam mit der Endlosfolienbahn 23, so dass ein Flugkreis der drei weiblichen Formwerkzeuge 35, 38, 39 beim Weiterschalten des Rotationsformtischs 36 entlang dem zweiten Teil der Maschinenrichtung 31 nicht gegen das noch warme Folienband stößt.

Das Formwerkzeug gelangt dadurch in eine Entnahmeposition 52 an einer Entnahmestation 27. Dort werden die Produkte 33 entformt und in der Stapelstation 28 gestapelt.

Das nun leere Formwerkzeug wird weitergeschaltet, so dass es die Belader in Richtung 30 erreicht und dort eine Beladeposition 53 einnimmt. Dort werden die Labels 45 in die Kavitäten 44 zugeführt.

Wenn mehr als drei weibliche Formwerkzeuge am Rotationsformtisch 36 vorhanden sind, dann ist der jeweilige Schaltwinkel zum Weiterschalten der Werkzeuge kleiner, und es können mehr Positionen angefahren werden und deshalb auch genutzt werden. So ist beispielsweise denkbar, in einer Zusatzfunktion ein Umspritzen eines Bauteils vorzunehmen, oder es kann eine Kühlstation vorgesehen sein.

Die bisher bevorzugte Ausführungsform weist einen Rotationsformtisch mit genau vier weiblichen Formwerkzeugen und demgemäß mit vier Funktionsstationen auf.

Es versteht sich, dass die vorstehend beschriebenen Ausführungsbeispiele nur einzelne Beispiele sind, die den gegenwärtigen besten erkennbaren Ausführungsweg verkörpern. Der gesamte Offenbarungsgehalt und der gesamte beanspruchte Schutzbereich ergeben sich aber nicht aus den Beispielen, sondern aus den Patentansprüchen und dazugehörigen Beschreibung. Die Beispiele geben nur optional kombinierbare vorteilhafte Merkmale wieder.

### Bezugszeichenliste

- 1: Erste Thermoformanlage
- 2: Thermoformstation
- 3: Stanzstation
- 4: Stapelstation
- 5: Maschinenrichtung
- 6: Endlosfolienband
- 7: Obertisch
- 8: Untertisch
- 9: Bett
- 10: Oberseite
- 11: Kippachse
- 12: Produkt
- 13: Stanzkörper
- 14: Stanzbrille
- 15: Stapel
- 16: Label
- 17: Bodenlabelteil
- 18: Seitenlabelteil
- 19: Einlegebewegung
- 20: Winkel
- 21: Zweite Thermoformanlage
- 22: Zuführung
- 23: Endlosfolienband
- 24: Maschinenrichtung
- 25: Heizstation
- 26: Kombinierte Thermoform-Durchfallstanz-Station
- 27: Entnahmestation
- 28: Stapelstation
- 29: Restfoliengitter
- 30: Beladeeinrichtung
- 31: Maschinenrichtung, zweiter Teil
- 32: Maschinenrichtung, dritter Teil
- 33: Produkt
- 34: Heizstrahler
- 35: Erstes weibliches Formwerkzeug
- 36: Rotationsformtisch
- 37: Schaltachse
- 38: Zweites weibliches Formwerkzeug
- 39: Drittes weibliches Formwerkzeug
- 40: Hubrichtung
- 41: Kombinierte Thermoform-Stanz-Position
- 42: Oberseite
- 43: Stanzring
- 44: Kavität
- 45: Label
- 46: Graphische Markierung
- 47: Vordehnstempel
- 48: Druckglocke
- 49: Stanzbrille
- 50: Senkbewegung
- 51: Hubrichtung
- 52: Entnahmeposition
- 53: Beladeposition

## Patentansprüche

1. Anlage (21) zum Thermoformen einer Folie zu einer Vielzahl Produkte (12, 33) in einer entsprechenden Vielzahl Kavitäten (44) in einem weiblichen Formwerkzeug (38, 39) an einem Formtisch sowie zum Versehen der Produkte (12, 33) mit Zusatzteilen, insbesondere Labels (16, 45) und/oder Smart Tags, innerhalb der Kavitäten (44), wobei die Anlage dazu eingerichtet ist, die Folie in einer Maschinenrichtung (24, 31, 5) zu transportieren, und wobei der Formtisch als Rotationsformtisch (36) mit mindestens drei Scharen Kavitäten (44) in drei weiblichen Formwerkzeugen gestaltet ist, der dazu eingerichtet ist, mittels eines Antriebs um eine Achse rotiert zu werden, um die mindestens drei Scharen Kavitäten (44) in unterschiedliche Positionen zu bringen, darunter in eine Thermoformposition und in eine Entnahmeposition (52),
**dadurch gekennzeichnet, dass**
der Rotationsformtisch (36) die mindestens drei Scharen Kavitäten (44) an Armen trägt, wobei die Scharen Kavitäten (44) an einem gegenüber einem Kern des Rotationsformtisches relativ bewegbar ausgestalteten radial äußeren Armteil getragen sind.

2. Anlage nach Anspruch 1, ***dadurch gekennzeichnet, dass*** die Anlage eine Einrichtung zum Heben und Senken einer Transportschiene für die Folie aufweist, sodass zum Rotieren des Rotationsformtischs die Folie angehoben oder abgesenkt und dadurch aus dem Flugkreis des Rotationsformtisches gebracht werden kann.

3. Anlage nach Anspruch 1 oder 2. ***dadurch gekennzeichnet, dass*** die Anlage eine Einrichtung (40) zum Heben und Senken des Rotationsformtisches aufweist, sodass zum Rotieren des Rotationsformtischs dieser angehoben oder abgesenkt werden und dadurch sein Flugkreis vollständig ober- oder unterhalb der Folie gebracht werden kann.

4. Anlagen nach Anspruch 3, ***dadurch gekennzeichnet, dass*** der Rotationsformtisch um eine aufrechte, bevorzugt vertikale. Achse (37) drehbar gestaltet ist, wobei bevorzugt der radial äußere Armteil gegenüber dem radial inneren, also zum Kern führenden, Armteil um eine Längserstreckungsrichtung des Arms rotierbar und/oder abknickbar gestaltet ist.

5. Anlage nach einem der vorstehenden Ansprüche, ***dadurch gekennzeichnet, dass*** die Anlage zum Thermoformen einer Mehrschichtfolie eingerichtet ist und dazu eine Mehrzahl Folieneinspeisemittel aufweist.

6. Verfahren zum taktweisen Thermoformen einer Vielzahl Produkte (12, 33) aus einer Folie in einer Anlage nach einem der Ansprüche 1 bis 5,
sowie zum Versehen der Produkte (12, 33) mit Zusatzteilen,
insbesondere mit Labels (16, 45) und/oder Smart Tags,
wobei die Anlage mindestens drei Scharen je einer Vielzahl Kavitäten (44) in einem weiblichen Formwerkzeug (38, 39) an einem Formtisch aufweist, vor allem an einem Rotationsformtisch (36), und wobei das Versehen mit Zusatzteilen innerhalb der Kavitäten (44) erfolgt, wobei die Anlage dazu eingerichtet ist, die Folie in einer Maschinenrichtung (24, 31, 5) zu transportieren, mit den Schritten
a. Einführen der Folie in das Formwerkzeug an einer Formstation;
b. Schließen einer Druckglocke (48) über einen Nutzen, der eine Schar Kavitäten (44) in einer Formposition umfasst;
c. Vordehnen der Folie in die Kavitäten (44) mittels einer Vordehnstempeleinrichtung;
d. Thermoformen der Produkte (12, 33) mittels Über- und/oder Unterdruck in die Kavitäten (44) hinein;
e. Abwarten einer Formzeit;
f. Ausführen eines Zusatzhubs des Formwerkzeugs, dabei Stanzen der Folie gegen eine Stanzbrille (14, 49), welche auf der Seite der Druckglocke (48) angeordnet ist;
g. Verfahren der Schar Produkte (12, 33) in eine Entnahmeposition (52) und dortiges Entnehmen der Produkte (12, 33) aus der Schar Kavitäten (44);
h. Verfahren der Schar Kavitäten (44) aus der Entnahmeposition (52) in eine Einlegposition und dortiges Einlegen der Zusatzteile in eine Schar Kavitäten (44); sowie
i. Verfahren der Schar Kavitäten (44) aus der Einlegeposition in die Formposition.

7. Verfahren nach Anspruch 6, ***dadurch gekennzeichnet, dass*** alle Verfahrvorgänge gleichzeitig erfolgen.

8. Verfahren nach einem der Ansprüche 6 oder 7, ***dadurch gekennzeichnet, dass*** zusätzlich zu den Form-, Entnahme- und Einlegpositionen eine weitere Position angefahren wird.

9. Verfahren nach einem der Ansprüche 6 bis 8, ***dadurch gekennzeichnet, dass*** die Stanzbrille und der Formtisch zum Verfahren der Scharen Kavitäten voneinander taktweise beabstandet und wieder angenähert werden.

## Claims

1. Plant (21) for thermoforming a foil to a plurality of products (12, 33) in a corresponding plurality of cavities (44) in a female form tool (38, 39) at a molding table, and for providing the products (12, 33) with supplementary parts, in particular labels (16, 45) and/or smart tags, within the cavities (44); the plant being adapted for translating the foil in a machine direction (24, 31, 5) and the molding table being embodied as a rotational molding table (36) with at least three assemblages of cavities (44) in three female form tools, which is adapted to be rotated about an axis by means of a drive so as to put the at least three assemblages of cavities (44) in different positions, including a thermoforming position and a removal position (52);
**characterized in that**
the rotational molding table (36) carries the at least three assemblages of cavities (44) at arms, where the assemblages of cavities (44) are carried at an arm portion radially on the outside which is relatively movable with respect to a core of the rotational molding table.

2. Plant according to Claim 1, ***characterized in that*** the plant has a unit for lifting and lowering a transport rail for the foil, so that for rotating the rotational molding table, the foil can be lifted or lowered and in this manner be removed from the circle of rotation of the rotational molding table.

3. Plant according to Claim 1 or 2, ***characterized in that*** the plant has a device (40) for lifting and for lowering the rotational molding table so that for rotation of the rotational molding table, the latter can be lifted or lowered, completely moving its circle of rotation above or below the foil.

4. Plant according to Claim 3, ***characterized in that*** the rotational molding table is rotatable about an upright, preferably vertical, axis (37) with the radially outward arm portion being preferably rotatable and/or foldable about a direction of longitudinal extension of the arm with respect to the arm portion which is radially on the inside, that is, which leads to the core.

5. Plant according to one of the above Claims, ***characterized in that*** the plant is adapted for thermoforming a multi-layer foil and has a plurality of foil feeding means for this purpose.

6. Method of thermoforming a plurality of products (12, 33) in cycles from a foil in a plant according to one of Claims 1 through 5,
and providing the products (12, 33) with supplementary parts,
in particular with labels (16, 45) and/or smart tags,
the plant having at least three assemblages each of a plurality of cavities (44) in a female form tool (38, 39) at a molding table, in particular at a rotational molding table (36), and where provision with supplementary parts takes place within the cavities (44), the plant being adapted to translate the foil in a machine direction (24, 31, 5); with the following steps:
a.guiding the foil into the form tool at a forming station;
b.closing a clamping bell (48) over a use part comprising an assemblage of cavities (44) in a forming position;
c.prestretching the foil into the cavities (44) by means of a prestretching die unit;
d. thermoforming the products (12, 33) into the cavities (44) by means of overpressure and/or low pressure;
e.waiting for a forming time;
f.performing an additional stroke of the form tool; during this process, punching of the foil against a punching block (14, 49) arranged on the side of the clamping bell (48);
g.translating the assemblage of products (12, 33) into a removal position (52) and in this position, removing the products (12, 33) from the assemblage of cavities (44);
h.translating the assemblage of cavities (44) from the removal position (52) into an insertion position and in this position, inserting the supplementary parts in an assemblage of cavities (44); and
i.translating the assemblage of cavities (44) from the insertion position into the forming position.

7. Method according to Claim 6, ***characterized in that*** all translation process take place simultaneously.

8. Method according to one of Claims 6 or 7, ***characterized in that*** another position is approached in addition to the forming, removal and insertion positions.

9. Method according to one of Claims 6 through 8, ***characterized in that*** the punching block and the molding table are mutually spaced and moved closer to each other in cycles for translating the assemblages of cavities.

## Revendications

1. Installation (21) de thermoformage d'un film en une multitude de produits (12,33) dans une multitude correspondante de cavités (44) dans un outil de formage femelle (38,39) sur une table de formage et d'équipement des produits (12,33) avec des pièces complémentaires, en particulier des étiquettes (16,45) et/ou des étiquettes intelligentes, à l'intérieur des cavités (44), l'installation étant conçue pour transporter le film dans un sens de la machine (24,31,5) et la table de formage étant réalisée sous forme d'une table de formage rotative (36) comportant au moins trois bandes de cavités (44) dans trois outils de formage femelles et étant conçue pour pouvoir tourner au moyen d'un organe de commande autour d'un axe afin d'amener les au moins trois bandes de cavités (44) dans des positions différentes, dont une position de thermoformage et une position de prélèvement (52),
**caractérisée en ce que** la table de formage rotative (36) supporte les au moins trois bandes de cavités (44) sur des bras, les bandes de cavités (44) étant supportés par une partie de bras radialement extérieure réalisée de manière à être mobile par rapport à un noyau de la table de formage rotative.

2. Installation selon la revendication 1, **caractérisée en ce que** l'installation présente un dispositif de levage et d'abaissement d'un rail de transport pour le film, de sorte que, pour faire tourner la table de formage rotative, le film est soulevé ou abaissé et peut ainsi être amené hors du cercle d'emprise de la table de formage rotative.

3. Installation selon la revendication 1 ou 2, **caractérisée en ce que** l'installation présente un dispositif (40) de levage et d'abaissement de la table de formage rotative, de sorte que, pour faire tourner la table de formage rotative, celle-ci peut être soulevée ou abaissée et que son cercle d'emprise peut être amené entièrement au-dessus ou en-dessous du film.

4. Installation selon la revendication 3, **caractérisée en ce que** la table de formage rotative est conçue pour pouvoir tourner autour d'un axe (37) redressé, de préférence vertical, qui est conçu de préférence pour pouvoir tourner, la partie radialement extérieure du bras par rapport à la partie radialement intérieure du bras, donc menant au noyau, et/ou être repliée autour d'un sens d'extension longitudinale du bras.

5. Installation selon l'une des revendications précédentes, **caractérisé en ce que** cette installation est conçue pour le thermoformage d'un film multicouche et présente à cet effet une pluralité de moyens d'alimentation en film.

6. Procédé de thermoformage cadencé d'une multitude de produits (12,33) à partir d'un film dans une installation selon une des revendications 1 à 5 et d'équipement des produits (12,33) avec des pièces complémentaires, en particulier des étiquettes (16,45) et/ou des étiquettes intelligentes, l'installation présentant au moins trois bandes comprenant chacune une multitude de cavités (44) dans un outil de moulage femelles (38,39) sur une table de formage, surtout sur une table de formage rotative (36), et l'équipement avec des pièces complémentaires ayant lieu à l'intérieur des cavités (44), l'installation étant conçue pour transporter le film dans un sens de la machine (24,31,5) par les étapes suivantes :
a. introduction du film dans l'outil de formage au niveau de la station de formage ;
b. fermeture d'une cloche à pression (48) au moyen d'un instrument qui présente une bande de cavités (44) dans une position de formage ;
c. pré-déformation du film dans les cavités (44) au moyen d'un piston de pré-déformation ;
d. thermoformage des produits (12,33) au moyen de surpression et/ou dépression appliquée dans les cavités (44) ;
e. attente d'une heure de formage ;
f. exécution d'une course supplémentaire de l'outil de formage, simultanément perforation du film contre une lunette de perforation (14, 49) qui est disposée sur le côté de la cloche à pression (48) ;
g. déplacement de la bande de produits (12,33) dans une position de prélèvement (52) où les produits (12, 33) sont prélevés dans la bande de cavités (44) ;
h. déplacement de la bande de cavités (44) de la position de prélèvement (52) jusqu'à une position d'insertion où les pièces complémentaires sont insérées dans une bande de cavités (44) ; et
i. déplacement de la bande de cavités (44) de la position d'insertion jusqu'à la position de formage.

7. Procédé selon la revendication 6, **caractérisé en ce que** toutes les opérations de déplacement ont lieu simultanément.

8. Procédé selon une des revendications 6 ou 7, **caractérisé en ce que**, en plus des positions de formage, de prélèvement et d'insertion, on s'approche d'une autre position.

9. Procédé selon la revendication 6 à 8, **caractérisé en ce que** la lunette de perforation et la table de formage sont écartées et rapprochées l'une de l'autre pour déplacer les bandes de cavités.
